# EUROPÄISCHE PATENTSCHRIFT

(11) **EP 0 849 313 B1**
(45) Veröffentlichungstag und Bekanntmachung des Hinweises auf die Patenterteilung: **29.08.2007**
(21) Anmeldenummer: 97121726.0
(22) Anmeldetag: 10.12.1997
(51) Int. Cl.: C08K 3/36, C08L 7/00, C08L 9/00, B60C 1/00

(54) **Kautschukmischung für Laufstreifen von Fahrzeugluftreifen**
Rubber composition for vehicle tyretread
Composition de caoutchouc pour bande de roulement de pneu

(30) Priorität: 21.12.1996 DE 19653938
(43) Veröffentlichungstag der Anmeldung: 24.06.1998
(73) Patentinhaber: Continental Aktiengesellschaft, 30165 Hannover (DE)
(72) Erfinder: du Bois, André Dr., 30657 Hannover (DE); Dumke, Joachim, 31275 Lehrte (DE); Harms, Anja, 30419 Hannover (DE); Loreth, Wolfgang Dr., 31867 Lauenau (DE)

(56) Entgegenhaltungen:
- EP-A- 0 673 792
- EP-A- 0 677 548
- US-A- 3 938 574
- US-A- 5 534 574

## Beschreibung

Die Erfindung betrifft eine schwefelvernetzbare Kautschukmischung für die Herstellung von Laufstreifen, insbesondere für Winterreifen, die als Kautschukkomponente Polyisopren, Polybutadien und Styren-Butadien-Copolymer sowie weitere übliche Füll- und Zusatzstoffe enthält.

Da die Fahreigenschaften eines Reifens in einem großen Umfang von der Kautschukzusammensetzung des Laufstreifens abhängig sind, werden besonders hohe Anforderungen an die Zusammensetzung der Laufstreifenmischung gestellt. Insbesondere für Winterreifen, die einerseits ein gutes Traktionsvermögen auf Schnee und Eis sowie auf naßer Fahrbahn aufweisen müssen, andererseits aber auch einen geringen Rollwiderstand und einen geringen Abrieb besitzen sollen, wird eine Optimierung dieser Eigenschaften besonders schwierig. Es wurde festgestellt, daß der eingesetzte Füllstoff einen wesentlichen Einfluß auf die Eigenschaften des Fahrverhaltens des Winterreifens hat. Kautschukmischungen für Laufstreifen, die nur Ruß als Füllstoff enthalten, zeigen zwar ein ausgewogenes Verhältnis zwischen dem Verhalten auf naßer und winterlicher Fahrbahn, jedoch auf einem noch nicht zufriedenstellenden Niveau. Außerdem sind aus dem Stand der Technik Winterreifen bekannt, deren Laufstreifen aus Kautschukmischungen bestehen, die als Füllstoff zum Teil Kieselsäure enthalten. Mit diesen Mischungen werden Winterreifen mit verbesserten Nässeeigenschaften erhalten - eine Anhebung der Wintereigenschaften ist aber so nicht möglich, so daß auch solche Mischungssysteme nicht optimal geeignet sind.

In der DE 44 42 691 bzw. DE 44 42 692 sind Kautschukmischungen für Laufstreifen offenbart, die als Kautschukkomponente emulsions-bzw. lösungspolymerisiertes Styren-Butadien-Copolymer, Polyisopren und Polybutadien enthalten. Als Füllstoffe sollen Kieselsäure (25 - 90 Gewichtsteile) bzw. Ruß verwendet werden. Es hat sich aber herausgestellt, daß diese Kautschukmischungen für Winterreifen nur unzureichend geeignet sind, da die Verwendung von emulsionspolymerisierten Styren-Butadien-Copolymer eine Verschlechterung in den Wintereigenschaften bewirkt und außerdem einen höheren Abrieb verursacht.

Weitere Kautschukmischungen mit Polyisopien, Polybutadien, Styren-Butadien-Copolymer und Füllstoffen sind aus der US-A-5 534 574, der EP-A-0 677 548, der EP-A-0 673 792 und der US-A-3 938 574 bekannt.

Die Aufgabe der vorliegenden Erfindung besteht darin, Winterreifen bereitzustellen, die zumindest bei gleichbleibendem Naßgriff eine hervorragende Traktion auf Eis und Schnee gewährleisten.

Gelöst wird diese Aufgabe erfindungsgemäß dadurch, daß die Kautschukmischung, bezogen auf 100 Teile des gesamten Kautschuks, 20 - 50 phr cis 1,4 Polyisopren, 15-50 phr Polybutadien mit einem cis-Gehalt > 90 mol% und 15- 65 phr lösungspolymerisiertes Styren-Butadien-Copolymer sowie 65-120 phr Kieselsäure enthält.

Überraschenderweise hat sich erwiesen, daß ein hoher Anteil (≥ 35 phr) an Polymeren mit einer niedrigen Glastemperatur (cis-Polyisopren: ca. - 70° C, Polybutadien mit einem cis-Gehalt > 90 mol%: ca. - 100° C) in Kombination mit 65-120 phr Kieselsäure und weiteren üblichen Zusatzstoffen Kautschukmischungen für Winterreifen ergeben, die eine hervorragende Traktion sowohl auf nasser als auch auf winterlicher, vereister Fahrbahn ermöglichen. Bisher zeigten nämlich Kautschukmischungen mit einem hohen Gehalt an Polymeren, die eine sehr niedrige Glastemperatur aufwiesen, in Kombination mit Ruß zwar hervorragende Wintereigenschaften, jedoch war die Haftung auf naßer Fahrbahn nicht optimal. Weiterhin zeigten Versuche mit Kautschukmischungen, die einen hohen Anteil an Polymeren mit sehr niedriger Glastemperatur in Verbindung mit in Emulsion polymerisierten Styren-Butadien-Copolymer und stark Kieselsäure gefüllte Mischungen ein verschlechtertes Abriebsverhalten und ungenügende Wintereigenschaften im Vergleich zu erfindungsgemäßen Mischungen.

Das erfindungsgemäß eingesetzte Polyisopren weist einen cis-1,4-Anteil > 90 mol% auf. Solch ein Polyisopren kann durch steriospezifische Polymerisation in Lösung mit Ziegler-Natta-Katalysatoren oder unter Verwendung von fein verteiltem Lithiumalkylen erhalten werden. Vorzugsweise soll für die erfindungsgemäße Kautschukmischung für Laufstreifen von Winterreifen Naturkautschuk Verwendung finden. Der cis-1,4 Polyisopren-Anteil im Naturkautschuk beträgt > 99 mol%.

Für die erfindungsgemäße Kautschukmischung von Winterreifen soll Polybutadien verwendet werden, dessen cis-1,4 Anteil > 90 mol% beträgt. Solch hohe cis-Anteile werden z. B. durch Lösungspolymerisation in Anwesenheit von Katalysatoren vom Typ der seltenen Erden erreicht. Dieser hohe cis-Gehalt ist erforderlich, um eine ausreichend niedrige Glastemperatur zu erreichen. Der cis-1,4-Anteil des Butadiens soll vorzugsweise einen Wert von 90 bis 99 mol% und der 1,2-Anteil ca. bis 5 mol% einnehmen.

Das in der erfindungsgemäßen Kautschukmischung zum Einsatz kommende Styren-Butadien-Copolymerisat ist ein in Lösung hergestelltes Polymer. Die Herstellung dieses Styren-Butadien-Types erfolgt unter Verwendung von z. B. Lithiumalkylen. Der Styrenanteil dieser Polymere beträgt ca. 15 bis 35 mol%.

Die in der erfindungsgemäßen Kautschukmischung zur Anwendung kommende Kieselsäure ist aus dem Stand der Technik bekannt. So sollen Kieselsäure mit einer BET-Oberfläche von 145 - 270 m²/g (ASTM D 5604), einer CTAB-Zahl von 120 - 285 m²/g (ASTM D 3765) und einem Porenvolumen von 0,7 - 1,7 ml/g (DIN 66133) Verwendung finden. Als Kieselsäure kann somit z. B. VN3 (Handelsname) der Firma Degussa zum Einsatz kommen. Zur Anbindung der Kieselsäure an das Polymersystem werden Aktivierungsmittel, z. B. Silane wie Bis-3-(triethoxysilylpropyl)tetrasulfid (TESPT) bzw. das entsprechende Disulfid verwendet.

Es ist vorteilhaft, wenn als weiterer Füllstoff Ruß verwendet wird, was verarbeitungstechnische Vorteile mit sich bringt. So können Rußmengen von 10 bis 40 pphr in der Kautschukmischung eingemischt werden, so daß dieser die erwünschten Eigenschaften verliehen werden. Die Ruße sollen folgende Charakteristika aufweisen: DBP-Zahl (ASTM D 2414) 90 bis 200 cm³/100 g und CTAB-Zahl (ASTM D 3765) von 80 bis 170 m²/g.

Des weiteren soll die erfindungsgemäße Kautschukmischung für Winterreifen übliche Zusatzstoffe wie Alterungsschutzmittel, Verarbeitungshilfsmittel und Weichmacher anteilig auch z. B. kälteflexible Weichmacher (z. B. Rapsöl) enthalten. Diese speziellen Weichmacher bringen weitere Vorteile bzgl. der Verarbeitung und verleihen dem Reifenlaufstreifen verbesserte Wintereigenschaften. Zur Vulkanisation wird Schwefel bzw. Schwefelspender verwendet und außerdem sollen vulkanisationsbeeinflussende Stoffe wie Beschleuniger oder Aktivatoren eingesetzt werden.

Die genannten Kautschukkomponenten (cis 1,4 Polyisopren, Polybutadien mit einem cis-Gehalt > 90 mol% und lösungspolymerisierter Styren-Butadien-Kautschuk) in den jeweilig angegebenen Konzentrationsbereichen in Verbindung mit 65 - 120 phr Kieselsäure ergeben Kautschukmischungen für Reifenlaufstreifen von Winterreifen, die eine hervorragende Traktion sowohl auf nasser als auch auf winterlicher Fahrbahn aufweisen.

Wenn der cis-1,4 Polyisoprenanteil zwischen 20 und 50 phr, der Polybutadiengehalt mit einem cis-Anteil > 90 mol% zwischen 15 und 50 phr und der Anteil an lösungspolymerisierten Styren-Butadien-Kautschuk zwischen 15 und 65 phr liegt und dabei die Kautschukmischung 65 - 120 phr Kieselsäure aufweist, hat es sich herausgestellt, daß in diesem Bereich ein relativ ausgewogenes Verhältnis zwischen den Eigenschaften erreicht wird.

Anhand der folgende Tabelle 1 soll ein Ausführungsbeispiel näher erläutert werden:

**Tabelle 1**

| | ***Standardmischungen [phr]*** | | | | ***Mischungen [phr]*** | | | | | |
|---|---|---|---|---|---|---|---|---|---|---|
| **Bestandteile** | **1** | **2** | **3** | **4** | **1 erf.g.** | **2 erf.g.** | **3 Vergleich** | **4 Vergleich** | **5 Vergleich** | **6 erf.g.** |
| Naturkautschuk | 60 | 10 | 60 | 35 | 35 | 30 | 60 | 100 | 90 | 35 |
| Polybutadien (BR) Cis-Gehalt > 90 mol% | 20 | 45 | 20 | 32,5 | 32,5 | 15 | 40 | -- | 10 | 32,5 |
| E-SBR Cariflex S 5820 | 20 | -- | 20 | 32,5 | -- | -- | -- | -- | -- | -- |
| S-SBR VSL 1940 S 20 | -- | 45 | -- | -- | 32,5 | 55 | -- | -- | -- | 32,5 |
| Kieselsäure VN3* | -- | 70 | 20 | 70 | 70 | 70 | 70 | 70 | 70 | 100 |
| Ruß N 121 | -- | 10 | -- | 10 | 10 | 10 | 10 | 10 | 10 | 10 |
| Ruß N 234 | 80 | -- | 60 | -- | -- | -- | -- | -- | -- | -- |
| Schwefel | 1,8 | 1,5 | 1,8 | 1,5 | 1,5 | 1,5 | 1,5 | 1,5 | 1,5 | 1,5 |
| CBS | 1,8 | 1,5 | 1,8 | 1,5 | 1,5 | 1,5 | 1,5 | 1,5 | 1,5 | 1,5 |
| DPG | -- | 2 | -- | 2 | 2 | 2 | 2 | 2 | 2 | 2 |
| Silan (TESPT) | -- | 7 | -- | 7 | 7 | 7 | 7 | 7 | 7 | 10 |
| **Eigenschaften** | | | | | | | | | | |
| Winter [%] | 100 | 99 | 100 | 100 | 104 | 102 | 108 | 104 | 105 | 104 |
| Nässe [%] | 100 | 105 | 103 | 105 | 105 | 108 | 100 | 109 | 108 | 114 |
| Abriebswiderstand [%] | 100 | 110 | 100 | 95 | 105 | 100 | 100 | 90 | 95 | 95 |

Die angegebenen Nässe-, Winter- bzw. Abriebeigenschaften sind bezogen auf die Meßergebnisse der Standardmischung 1. Diese werden dem Wert 100 zugeordnet, so daß Werte >100 eine Verbesserung der jeweiligen Eigenschaft und Werte < 100 eine Verschlechterung dieser bedeutet.
Die Einheit phr bezieht sich auf 100 Teile des Gesamtkautschukanteils.

Aus der Tabelle 1 wird ersichtlich, daß konventionelle Laufstreifenmischungen, die als Füllstoff Ruß (Standard 1) bzw. Kieselsäure (Standardmischungen 2 bis 4) enthalten, in den Wintereigenschaften auf vergleichbarem Niveau liegen. Diese Wintereigenschaften werden auch nicht durch einen teilweisen Austausch von Ruß durch Kieselsäure beeinflußt wie es bei den Nässeeigenschaften der Fall ist. Eine Verbesserung der Traktion auf Eis und Schnee wird erst durch die erfindungsgemäße Kombination eines Polymersystems auf der Basis von cis-Polyisopren, Polybutadien (cis-Gehalt > 90 mol%) und lösungspolymerisierten Styren-Butadien-Copolymeren in Verbindung mit dem Füllstoff Kieselsäure in angegebener Konzentration ermöglicht. Die für Winterreifen wesentliche Eigenschaft, nämlich die Traktion auf Eis und Schnee, wird durch die erfindungsgemäßen Kautschukmischungen für Laufstreifen positiv beeinflußt, bei im wesentlichen einer Erhöhung der Haftung auf nasser Fahrbahn. Dabei ist es unerheblich, ob der gesamte Laufstreifen aus einer einzigen Mischung hergestellt worden ist oder einen z. B. Cap- und Base-Aufbau aufweist, denn wichtig ist, daß zumindest die mit der Farbahn in Berührung kommende Fläche aus der erfindungsgemäßen Kautschukmischung hergestellt worden ist. Es können somit erfindungsgemäß bisher noch nicht erreichbare Eigenschaften bezüglich der Haftung auf winterlicher und nasser Fahrbahn erzielt werden. Dieses Ergebnis war besonders überraschend, da Erfahrungen bei der Verwendung von Polymeren mit niedriger Glastemperatur einen solchen Schluß nicht vermuten ließen.

## Patentansprüche

1. Schwefelvernetzbare Laufstreifenmischung für die Herstellung von Winterreifen, die als Kautschukkomponenten Polyisopren, Polybutadien und Styren-Butadien-Copolymer sowie weitere übliche Füll- und Zusatzstoffe enthält, **dadurch gekennzeichnet, daß** sie 20 - 50 phr cis-1,4-Polyisopren mit einem cis-1,4-Anteil > 90 mol%,15 - 50 phr Polybutadien mit einem cis-Gehalt > 90 mol%, 15 - 65 phr lösungspolymerisiertes Styren-Butadien-Copolymer mit einem Styrenanteil von 15 bis 35 mol% und 65-120 phr Kieselsäure mit einer BET-Oberfläche von 145 bis 270 m²/g (ASTM D 5604), einer CTAB-Zahl von 120 - 285 m²/g (ASTM D 3765) und einem Porenvolumen von 0,7-1,7 mUg (DIN 66133) sowie weitere übliche Füll- und Zusatzstoffe enthält.

2. Laufstreifenmischung nach Anspruch 1, **dadurch gekennzeichnet, daß** das cis-1,4-Polyisopren Naturkautschuk ist.

3. Laufstreifenmischung nach zumindest einem der vorhergehenden Ansprüche, **dadurch gekennzeichnet, daß** die Kautschukmischung als weiteren Füllstoff Ruß enthält.

4. Laufstreifenmischung nach Anspruch 3, **dadurch gekennzeichnet, daß** die Kautschukmischung 10 bis 40 phr Ruß enthält.

5. Fahrzeugluftreifen, **dadurch gekennzeichnet, daß** er einen Reifenlaufstreifen aufweist, der aus der Laufstreifenmischung nach zumindest einem der vorhergehenden Ansprüche hergestellt ist.

## Claims

1. Sulphur cross-linkable tread mixture for the manufacture of winter tires, comprising as rubber components polyisoprene, polybutadiene and styrene-butadiene copolymer and also further typical fillers and additives, **characterized in that** it contains 20-50 phr cis-1,4-polyisoprene with a cis-1,4 content > 90 mole %, 15-50 phr polybutadiene with a cis content > 90 mole %, 15-65 phr solution-polymerized styrene-butadiene copolymer with a styrene content of 15 to 35 mole % and 65-120 phr silica with a BET surface area of 145 to 270 m²/g (ASTM D 5604), a CTAB number of 120-285 m²/g (ASTM D 3765), and a pore volume of 0.7-1.7 mL/g (DIN 66133), and further typical fillers and additives.

2. Tread mixture according to Claim 1, **characterized in that** the cis-1,4-polyisoprene is natural rubber.

3. Tread mixture according to at least one of the preceding claims, **characterized in that** the rubber mixture comprises carbon black as a further filler.

4. Tread mixture according to Claim 3, **characterized in that** the rubber mixture contains 10 to 40 phr carbon black.

5. Vehicle pneumatic tire, **characterized in that** it has a tire tread manufactured from the tread mixture according to at least one of the preceding claims.

## Revendications

1. Mélange pour bande de roulement apte à être réticulé au soufre pour la fabrication de pneus d'hiver, dont les composants du caoutchouc sont le polyisoprène, le polybutadiène et un copolymère de styrène et de butadiène ainsi que d'autres charges et additifs habituels, **caractérisé en ce qu'**il contient de 20 à 50 phr de cis-1,4-polyisoprène d'une teneur en cis-1,4 > 90 % en mole, de 15 à 50 phr de polybutadiène d'une teneur en cis > 90 % en mole, de 15 à 65 phr de copolymère de styrène et de butadiène polymérisé en solution d'une teneur en styrène de 15 à 35 % en moles et de 65 à 120 phr d'acide silique d'une surface spécifique de 145 à 270 m²/g (ASTM D 5604), l'indice CTAB est de 120 à 285 m²/g (ASTM D 3765) et le volume des pores de 0,7 à 1,7 ml/g (DIN 66133), ainsi que d'autres charges et additifs habituels.

2. Mélange pour bande de roulement selon la revendication 1, **caractérisé en ce que** le cis-1,4-polyisoprène est du caoutchouc naturel.

3. Mélange pour bande de roulement selon au moins l'une des revendications précédentes, **caractérisé en ce que**, comme charge supplémentaire, le mélange de caoutchouc contient de la suie.

4. Mélange pour bande de roulement selon la revendication 3, **caractérisé en ce que** le mélange de caoutchouc contient de 10 à 40 phr de suie.

5. Pneu de véhicule, **caractérisé en ce qu'**il présente une bande de roulement de pneu fabriquée à base du mélange pour bande de roulement selon au moins l'une des revendications précédentes.
